# EUROPÄISCHE PATENTANMELDUNG

(11) **EP 3 085 984 A1**
(43) Veröffentlichungstag der Anmeldung: **26.10.2016**
(21) Anmeldenummer: 15166395.2
(22) Anmeldetag: 05.05.2015
(51) Int. Cl.: F16D 65/853, B60T 5/00, F16D 65/12, F16D 13/64, F16D 65/847, F16D 67/00

(54) **KUPPLUNGS-BREMS-KOMBINATION**

(30) Priorität: 24.04.2015 EP 15165097
(71) Anmelder: Ortlinghaus-Werke GmbH, 42929 Wermelskirchen (DE)
(72) Erfinder: Langenbeck, Bernhard, 44267 Dortmund (DE); Seeger, Herbert, 35247 Bad Oeynhausen (DE); Sorhage, Jörg, 35247 Bad Oeynhausen (DE); Meller, Udo, 42929 Wermelskirchen (DE)
(74) Vertreter: Stenger Watzke Ring

(57) **Zusammenfassung**

Die Erfindung betrifft eine Kupplungs-Brems-Kombination mit einer reibschlüssigen Kupplung (47) und einer reibschlüssigen Bremse (46), wobei die Kupplung (47) und die Bremse (46) jeweils über äußere und innere Lamellen (1, 20) mit Reibbelägen (2) verfügen, wobei ein Kolben derart zwischen der Kupplung (47) und der Bremse (46) beweglich angeordnet ist, dass entweder die Kupplung (47) geöffnet und die Bremse (46) geschlossen oder aber die Kupplung (47) geschlossen und die Bremse (46) geöffnet ist. Um eine gattungsgemäße Kupplungs-Brems-Kombination weiterzuentwickeln, wird mit der Erfindung vorgeschlagen, dass die Kupplung (47) und/oder die Bremse (46) durch Eigenventilation luftgekühlt sind.

## Beschreibung

Die Erfindung betrifft eine Kupplungs-Brems-Kombination mit einer reibschlüssigen Kupplung und einer reibschlüssigen Bremse, wobei die Kupplung und die Bremse jeweils über äußere und innere Lamellen mit Reibbelägen verfügen, wobei ein Kolben derart zwischen der Kupplung und der Bremse beweglich angeordnet ist, dass entweder die Kupplung geöffnet und die Bremse geschlossen oder aber die Kupplung geschlossen und die Bremse geöffnet ist.

Derartige Kupplung-Brems-Kombinationen sind aus dem Stand der Technik bekannt, beispielsweise aus der DE 10 2007 046 104 A1. Es handelt sich hierbei um Vorrichtungen, welche beispielsweise den Antriebsstrang einer Presse mit einem Antrieb derart verbinden, dass der Antriebsstrang entweder gebremst oder bewegungstechnisch mit dem Antrieb gekoppelt werden kann.

Die Kupplung und die Bremse sind reibschlüssig, nämlich als Lamellenkupplung bzw. Lamellenbremse ausgebildet. Die Kupplung und die Bremse umfassen jeweils eine Lamellenanordnung, wobei äußere Lamellen mit einem ersten Teil und innere Lamellen mit einem zweiten Teil drehfest verbunden sind. Das erste und das zweite Teil der Kupplung bzw. Bremse können gegeneinander verdreht werden.

Es ist aus dem Stand der Technik üblich, dass die Kupplung und die Bremse nasslaufen. Dies bedeutet, dass die Lamellen in einem Flüssigkeits-, insbesondere Ölbad laufen. Das Öl im Ölbad kann umgewälzt werden. Es dient dazu, die bei einem Schließen der Kupplung oder Bremse anfallende Reibungswärme von der Kupplung oder Bremse wegzuleiten.

Die nasslaufenden Systeme haben den Vorteil, dass praktisch kein Verschleiß auftritt und es sich somit um ein dauerfestes System handelt.

Der Nasslauf hat jedoch auch Nachteile. Bei einer Relativbewegung der Lamellen der Kupplung oder. Bremse zueinander wird das Kühlöl geschert, wodurch entsprechende Verlustleistungen auftreten.

Hinzukommt, dass eine nasslaufende Kupplungs-Brems-Kombination bei bestimmten Einsatzzwecken hinsichtlich einer möglichen Schädigung der Umwelt problematisch ist. Hierzu gehört die maritime Verwendung.

Eine trockenlaufende Kupplungs-Brems-Kombination ist aus der EP 1 715 212 A2 bekannt. In dieser Druckschrift wird jedoch bereits das Problem beschrieben, dass eine reine Luftkühlung eine Kupplungs-Brems-Kombination rasch an die thermische Belastungsgrenze der eingesetzten Materialien führt. Dies liegt insbesondere darin begründet, dass die spezifische Wärmekapazität von der Luft deutlich geringer ist als von flüssigen Kühlmedien wie Wasser oder Kühlöl.

Die EP 1 715 212 A2 schlägt daher vor, dass ein Kühlluftstrom eingangsseitig durch eine angeschlossene Druckluftanlage oder ausgangsseitig durch eine angeschlossene Saugpumpe, beispielsweise in Form eines Gebläses, erzeugt wird. Es werden mit anderen Worten aktive Mittel gefordert, um einen zur Kühlung ausreichend hohen Luftstrom zu erzeugen.

Wenngleich sich die bekannten Kupplungs-Brems-Kombinationen bewährt haben, besteht dennoch Verbesserungsbedarf. So soll der Energiebedarf, beispielsweise auch in Form von Verlustleistungen, weiter gesenkt werden. Außerdem sollen die Herstellkosten und die Lebenszykluskosten der Kupplungs-Brems-Kombination verringert werden.

Vor diesem Hintergrund ist es die **Aufgabe** der vorliegenden Erfindung, eine gattungsgemäße Kupplungs-Brems-Kombination dahingehend weiterzuentwickeln, dass der Energiebedarf, die Herstellkosten und die Lebenszykluskosten gegenüber den aus dem Stand der Technik bekannten Lösungen verringert sind.

Zur **Lösung** schlägt die Erfindung vor, dass die Kupplung und/oder die Bremse durch Eigenventilation luftgekühlt ist bzw. sind.

Im Unterschied zu den nasslaufenden Kupplungs-Brems-Kombinationen schlägt die Erfindung eine, insbesondere ausschließlich, trockenlaufende Kupplungs-Brems-Kombination vor. Dies bedeutet, dass die Lamellen nicht in einem Flüssigkeitsbad laufen, durch welches sie gekühlt würden. Eine Kühlung der Lamellen erfolgt erfindungsgemäß durch Luft, was je nach Einsatzzweck auch ein allgemein gasförmiges Medium sein kann. Der Erfindungsgedanke liegt nun darin, dass die Kühlluft nicht aktiv durch die Kupplungs-Brems-Kombination gefördert wird, d. h. insbesondere nicht durch eine zusätzliche, Antriebsenergie benötigende externe Vorrichtung, wie beispielsweise ein Druckluftaggregat oder eine durch einen Elektromotor angetriebene Saugpumpe, beispielsweise ein Gebläse. Die Erfindung sieht vielmehr eine Eigenventilation vor. Dies bedeutet, dass der für eine Kühlung erforderliche Luftstrom durch die Kupplungs-Brems-Kombination selbst erzeugt wird. Man kann insofern auch von einer passiven Luftkühlung sprechen. Eigenventilation meint insbesondere, dass der Luftstrom zur Kühlung nur durch Energien, insbesondere Bewegungen erzeugt wird, welche bei einer bestimmungsgemäßen Verwendung der Kupplungs-Brems-Kombination ohnehin auftreten. Die Kupplungs-Brems-Kombination sorgt mit anderen Worten selbst dafür, den zur Kühlung erforderlichen Luftstrom zu erzeugen.

Erfindungsgemäß wird die Kupplung und/oder die Bremse vorzugsweise ausschließlich durch Eigenventilation luftgekühlt. Zur Kühlung/Wärmeübertragung können Konvektion, Wärmeleitung und/oder Zirkulation verwendet werden. Eine erfindungsgemäße Kupplungs-Brems-Kombination zeichnet sich auch dadurch aus, dass sie keinerlei Zusatzenergie, beispielsweise Antriebsenergie für ein Gebläse, benötigt.

Der Vorteil der Erfindung besteht unter anderem darin, dass der Energiebedarf gegenüber den aus dem Stand der Technik bekannten Vorrichtungen verringert ist. Die durch eine nasslaufende Bremse bzw. Kupplung durch Scherung der Kühlflüssigkeit hervorgerufene Verlustleistung entfällt vollständig. Gleichzeitig entfällt die Energie, welche für den Betrieb einer aktiven Vorrichtung zur Förderung der Kühlluft, beispielsweise eine Druckluftanlage, ein Gebläse oder dergleichen, erforderlich wäre. Dadurch lassen sich auch die Herstellkosten der Kupplungs-Brems-Kombination reduzieren. Gleichzeitig ist durch den Verzicht auf Drucklufteinrichtungen und dergleichen der erforderliche Bauraum geringer.

Eine erfindungsgemäße Kupplungs-Brems-Kombination kann beispielsweise im maritimen Umfeld angewendet werden, ohne dass eine Gefahr von Umweltschäden durch Austreten des Kühlöls und/oder dergleichen gegeben wäre. Insofern ist eine erfindungsgemäße Kupplungs-Brems-Kombination auch ressourcenschonend, umweltverträglich sowie nachhaltig.

Eine erfindungsgemäße Kupplungs-Brems-Kombination, insbesondere deren Lamellen können strömungstechnisch mit der Umgebung der Kupplungs-Brems-Kombination verbunden sein. Die durch Eigenventilation geförderte Kühlluft kann von außerhalb in die Kupplungs-Brems-Kombination einströmen und nach Wärmetausch an den Lamellen wieder ausströmen. Ein Gehäuse der Kupplungs-Brems-Kombination kann offen ausgebildet sein.

Die Luftkühlung durch Eigenventilation kann durch vielerlei Maßnahmen jeweils einzeln oder in Kombination miteinander realisiert werden. Eine Möglichkeit besteht beispielsweise darin, dass die Reibbeläge zumindest einer Lamelle, insbesondere einer äußeren Lamelle, unter Belassung eines Luftspalts auf einem Lamellengrundkörper angeordnet sind. Der Luftspalt erstreckt sich vorzugsweise radial zur Lamelle. Durch den Luftspalt kann der Reibbelag unmittelbar an seiner der Reibfläche gegenüberliegenden Seite luftgekühlt werden. Eine Kühlung wird nicht durch ein gegebenenfalls in gewissem Maße isolierendes Material des Lamellengrundkörpers und/oder dergleichen gehindert. Der Luftspalt weist vorzugsweise an einer inneren und einer äußeren Ringfläche der Lamelle Öffnungen auf. Diese sind in radialer Richtung einander gegenüberliegend angeordnet. Der Reibbelag kann somit über seine gesamte Erstreckung in radialer Richtung von Luft umströmt, insbesondere hinterströmt werden. Durch den Luftspalt sind der Reibbelag und der Lamellengrundkörper in axialer Richtung voneinander beabstandet.

Die Reibbeläge können vom Lamellengrundkörper durch Abstandshalteelemente beabstandet angeordnet sein. Die Abstandshalteelemente sorgen einerseits dafür, dass der Reibbelag lagesicher angeordnet ist. Beispielsweise ein Durchbiegen, Schwingen oder dergleichen beim bestimmungsgemäßen Betrieb wird dadurch verhindert. Gleichzeitig sind die einzelnen Abstandshalteelemente selbst voneinander beabstandet. Dies bedeutet, dass zwischen den einzelnen Abstandshalteelementen eine Vielzahl von Luftspalten gebildet ist, durch welche im bestimmungsgemäßen Betrieb Kühlluft strömen kann.

Die Abstandshalteelemente können als über die der Reibfläche gegenüberliegende Seite des Reibbelags verteilten Noppen ausgebildet sein. Die Nocken können einen kreisrunden Querschnitt aufweisen. Hierdurch kann ein besonders gutes Umströmungsverhalten und ein besonders effektiver Wärmetransport vom Reibbelag erreicht werden.

Die Reibbeläge können auswechselbar am Lamellengrundkörper angeordnet sein. Sie können mit dem Lamellengrundkörper verschraubt oder vernietet sein. Die Reibklötze sind vorzugsweise hinterlüftet ausgebildet. Die Reibbeläge können aus einem gesinterten Material ausgebildet sein. Die Reibbeläge können zumindest teilweise aus Aluminium ausgebildet sein. Dieses weist eine besonders gute Wärmeleitung auf und ist zudem gegenüber beispielsweise Kupfer umweltverträglicher.

Die Noppen können in mehreren, radial voneinander beabstandeten Reihen angeordnet sein. Jede Reihe kann jeweils um eine halbe Teilung versetzt angeordnet sein. Hierdurch lässt sich eine noch bessere Kühlwirkung erreichen.

Gemäß einer vorteilhaften Weiterbildung der Erfindung kann der Lamellengrundkörper radiale Kanäle aufweisen, auf denen bei bestimmungsgemäßer Verwendung die Reibbeläge angeordnet sind. Die Kanäle können im Lamellengrundkörper als radiale Nuten ausgebildet sein. Durch Anordnung eines Reibbelags auf einer solchen Nut wird die Nut zu einem Kanal geschlossen. Die Nut bzw. der Kanal ist dann nur noch durch in radialer Richtung gegenüberliegende Öffnungen zugänglich. Der Reibbelag wird dadurch im Betrieb hinterlüftet. Der Lamellengrundkörper kann bei radialer Draufsicht in Umfangsrichtung ein alternierendes Profil, beispielsweise ein Rechteck-, Wellenprofil oder dergleichen aufweisen. Dies bedeutet, dass in Umfangsrichtung aufeinanderfolgende Nuten bzw. Kanäle jeweils versetzt auf beiden Seiten des Lamellengrundkörpers angeordnet sind. Die Reibbeläge können auf einem, insbesondere einstückigen, Belagring angeordnet sein. Der mit Reibbelägen bestückte Belagring wird auf dem Lamellengrundkörper befestigt. Vorzugsweise sind am Lamellengrundkörper und am Belagring Befestigungsmittel vorgesehen, welche ausschließlich eine bestimmungsgemäße Anordnung der Reibbeläge jeweils über den radialen Kanälen ermöglichen. Die Befestigungsmittel dienen somit als Montagehilfe.

Gemäß einer vorteilhaften Weiterbildung der Erfindung weist zumindest eine Lamelle auf der dem Reibbelag gegenüberliegenden Seite Kühlrippen auf. Alternativ kann auch der Reibbelag selbst auf der der Reibfläche gegenüberliegenden Seite Kühlrippen aufweisen. Die Kühlrippen sorgen dafür, dass die zur Umströmung zur Verfügung stehende Oberfläche vergrößert wird. Hierdurch kann der Wärmetransfer, d. h. die Kühlung der Reibbeläge, weiter verbessert werden. Die Kühlrippen erstrecken sich vorzugsweise in radialer Richtung.

Vorzugsweise weist eine Lamelle auf beiden Seiten in Umfangsrichtung abwechselnd einen Reibbelag und Kühlrippen auf. Die einzelnen Reibbeläge auf einer Seite der Lamelle sind in Umfangsrichtung voneinander beabstandet. In einem Bereich, in dem kein Reibbelag angeordnet ist, sind Kühlrippen angeordnet. Auf der jeweils den Kühlrippen gegenüberliegenden Seite der Lamelle ist ein Reibbelag angeordnet. Die Reibbeläge sind somit in Umfangsrichtung auf beiden Seiten der Lamelle zueinander versetzt angeordnet. Jeweils ein Bereich mit Kühlrippen kühlt jeweils den auf der gegenüberliegenden Seite angeordneten Reibbelag.

Es kann vorgesehen sein, dass die äußere Lamelle in radialer Richtung über die innere Lamelle vorsteht. Die zuvor beschriebenen radialen Kanäle und Kühlrippen können sich bis in diesen vorstehenden Bereich hinein erstrecken. Dadurch kann die für den Wärmeaustausch zur Verfügung stehende Oberfläche weiter vergrößert werden.

Gemäß einer vorteilhaften Weiterbildung der Erfindung weist zumindest eine äußere Lamelle in einem radial über eine innere Lamelle vorstehenden Bereich zumindest ein Luftleitelement auf. Hierbei kann es sich um auf die Lamelle aufgesetzte oder integrierte Flügel, Leitbleche und/oder dergleichen handeln. Diese können eine aerodynamische Gestaltung aufweisen. Sie dienen dazu, die Strömungsverhältnisse im Hinblick auf einen verbesserten Wärmeaustausch zu optimieren. Dadurch kann im Ergebnis eine noch effektivere Kühlung der Lamellen erfolgen.

Gemäß einer vorteilhaften Weiterbildung der Erfindung weist zumindest eine innere Lamelle eine Belüftungsöffnung auf. Die Belüftungsöffnung ist vorzugsweise im Bereich oder nahe eines Trägers für die innere Lamelle, beispielsweise eines auf eine Antriebswelle aufgeschobenen Zylinders oder dergleichen, angeordnet. Die Belüftungsöffnung kann als Ausnehmung der Lamelle ausgebildet sein, wodurch die Lamelle vom Lamellenträger in diesem Bereich beabstandet ist. Durch die Belüftungsöffnung kann Luft ins Innere der Lamelle strömen und die Lamelle in radialer Richtung nach außen wieder verlassen. Dadurch wird die Luftkühlung weiter verbessert.

Gemäß einer vorteilhaften Weiterbildung der Erfindung sind die Reibbeläge der inneren Lamellen aus einem keramischen Faserverbundstoff, insbesondere C/C-SiC ausgebildet. Es handelt sich hierbei um ein Kohlenstofffaser-verstärktes Siliziumcarbid. Bei einer solchen Verbundkeramik kommt als Fasertyp Kohlenstoff und als Matrixtyp eine Kombination von Kohlenstoff und Siliziumcarbid zum Einsatz. Dieser Werkstoff hat unter anderem die Eigenschaft, dass er eine sehr geringe Dichte (ungefähr 2 g/cm³) und eine sehr geringe Wärmedehnung aufweist. Die geringe Dichte ist insbesondere im Hinblick darauf von Vorteil, dass die innere Lamellen der Kupplungs-Brems-Kombination bei bestimmungsgemäßer Verwendung rotieren. Es handelt sich folglich um Massen, deren Massenträgheitsmomente hinsichtlich der Dynamik berücksichtigt werden müssen. Eine geringe Dichte des Werkstoffs der inneren Lamellen führt zu einer entsprechend verringerten Masse und einem entsprechend verringerten Massenträgheitsmoment. Folglich kann der Einsatz an kinetischer Energie zum Betrieb der Kupplungs-Brems-Kombination verringert werden, insbesondere beim Beschleunigungs- und Bremsprozess.

Hinzukommt, dass die zuvor beschriebenen Werkstoffe gut als Reibbeläge geeignet sind. Sofern der jeweils korrespondierende Reibbelag der äußeren Lamelle entsprechend weicher ausgebildet ist, unterliegen die aus dem zuvor beschriebenen Werkstoff gebildeten inneren Lamellen praktisch keinem Verschleiß. Dadurch können die Lebenszykluskosten einer erfindungsgemäßen Kupplungs-Brems-Kombination verringert werden. Ein Austausch der Reibbeläge an den äußeren Lamellen ist nämlich mit wesentlich weniger Aufwand verbunden als ein Austausch der Reibbeläge an den inneren Lamellen.

Nicht nur die Reibbeläge können aus dem zuvor beschriebenen keramischen Faserverbundwerkstoff ausgebildet sein, sondern die, insbesondere ganzen, inneren Lamellen. Alternativ können die inneren Lamellen aus einem faserverstärkten Kunststoff ausgebildet sein. Es kann sich beispielsweise um einen faserverstärkten Kunststoff mit Mikroschaum-Struktur handeln. Es kommt ein faserverstärkter Thermoplast in Frage. Vorteile sind die Möglichkeit einer sehr präzisen Fertigung, ein hoher Dämpfungsgrad bei Einsatz der Mikroschaum-Struktur, eine weitestgehende Temperaturunabhängigkeit sowie eine weiter verringerte Dichte, nämlich nur ca. 1,5 g/cm³.

Sofern die innere Lamelle aus einem keramischen Faserverbundwerkstoff gebildet ist, kann diese aus einem spiralgewebten Ringgeflecht ausgebildet sein. Dadurch kann die innere Lamelle bereits endfertig aus dem keramischen Faserverbundwerkstoff hergestellt werden. Bislang war es nämlich bei solchen Faserverbundwerkstoffen erforderlich, insbesondere die innere Struktur zur Verbindung mit einem Lamellenträger auszuschneiden. Dies führte zu einem hohen Materialverschnitt und einer Einbuße an Gewebefestigkeit durch die geschnittenen Fasern.

Nicht zuletzt durch die Ausbildung der inneren Lamellen aus einem spiralgewebten Ringgeflecht können unterschiedlichste Innenkonturen der inneren Lamellen realisiert werden. Die inneren Lamellen können über den Umfang verteilt radial nach innen vorstehenden Nocken aufweisen. Die Flanken der Nocken verlaufen vorzugsweise radial zur Mittelachse der Lamelle. Bei solchen Nocken kann eine Ausgleichsfuge vorgesehen sein, um unterschiedliches Temperaturwachstum von Lamelle einerseits und Lamellenträger andererseits auszugleichen.

Gemäß einer vorteilhaften Weiterbildung der Erfindung kann ein mit einem Schwungrad gekoppelter Lüfter vorgesehen sein. Gattungsgemäße Kupplungs-Brems-Kombinationen sind oft bewegungstechnisch mit einem Schwungrad gekoppelt, welches dazu dient, die dynamischen Verhältnisse zu vergleichmäßigen. Das Schwungrad dreht insbesondere weiter, wenn die Kupplungs-Brems-Kombination den damit gekoppelten Antriebsstrang bremst. Insofern kann die kinetische Energie des Schwungrads dazu genutzt werden, einen zusätzlichen Luftstrom zur Kühlung der Kupplungs-Brems-Kombination zu erzeugen. Dies kann beispielsweise nachdem Querstromprinzip erfolgen.

Gemäß einer vorteilhaften Weiterbildung der Erfindung sind in einem die inneren Lamellen tragenden Zylinder Luftkanäle und/oder Kühlölkanäle vorgesehen. Bei dem Zylinder kann es sich um den vorstehend so bezeichneten Lamellenträger handeln. In diesem Zylinder können geschlossene Luftkanäle und/oder Kühlölkanäle vorgesehen sein. Diese sorgen im Unterschied zur direkten Strömung der Lamellen mit Kühlluft für eine indirekte Kühlung durch Abtransport von Wärme aus den Bauteilen der Kupplungs-Brems-Kombination. Ein derartiger Kühlölkanal kann vollständig gekapselt ausgebildet werden, so dass auch keine Gefahr von austretendem Öl und damit Umweltbeeinträchtigungen besteht.

Weitere Vorteile und Merkmale der Erfindung ergeben sich anhand der nachfolgenden Figurenbeschreibung. Es zeigen:
- Fig. 1:: eine erste Ausführungsform einer Außenlamelle für eine Kupplungs-Brems-Kombination;
- Fig. 2:: eine zweite Ausführungsform einer Außenlamelle für eine Kupplungs-Brems-Kombination;
- Fig. 3:: eine dritte Ausführungsform einer Außenlamelle;
- Fig. 4:: eine Ausführungsform eines Lamellenpakets für eine Kupplungs-Brems-Kombination;
- Fig. 5:: eine weitere Ausführungsform einer Außenlamellen für eine Kupplungs-Brems-Kombination;
- Fig. 6:: eine Ausführungsform eines auf einem Träger angeordneten Lamellenpakets mit Außenlamellen nach Fig. 2;
- Fig. 7:: eine weitere Ausführungsform einer Außenlamelle;
- Fig. 8:: zwei Ausführungsformen von auf einem Träger angeordneten Innenlamellen;
- Fig. 9:: eine weitere Ausführungsform einer Innenlamelle für eine Kupplungs-Brems-Kombination;
- Fig. 10:: ein Schnitt durch die Außenlamelle gemäß Fig. 7 entlang der Linie XII-XII;
- Fig. 11:: eine weitere Ausführungsform einer Außenlamelle;
- Fig. 12:: eine Detailansicht der Außenlamellen gemäß Fig. 13;
- Fig. 13:: eine weitere Ausführungsform einer Außenlamelle;
- Fig. 14:: eine weitere Ausführungsform einer Außenlamelle und
- Fig. 15:: eine Ausführungsform einer erfindungsgemäßen Kupplungs-Brems-Kombination.

Im Folgenden sind unterschiedliche Ausführungsformen der gleichen erfindungsgemäßen Bauteile mit gleichen Bezugszeichen bezeichnet.

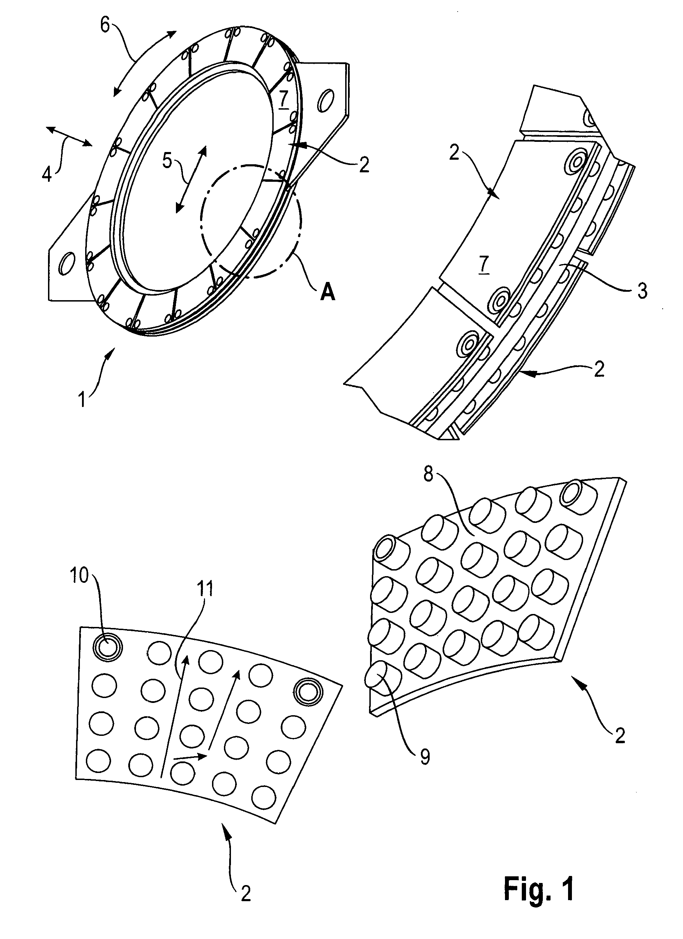

Fig. 1 zeigt eine erste Ausführungsform einer Außenlamelle 1. Diese ist im Wesentlichen ringförmig ausgebildet. Sie verfügt über einen Lamellengrundkörper 3. Auf beiden Seiten des Lamellengrundkörpers 3 sind Reibbeläge 2 angeordnet. Die Reibbeläge 2 sind mit dem Lamellengrundkörper 3 verschraubt, könnten jedoch auch auf andere Art und Weise an diesem befestigt sein.

Die Reibbeläge 2 sind als Ringsegmente ausgebildet. Eine Vielzahl von Reibbelägen 2 ist in Umfangsrichtung 6 aneinandergereiht, um eine im Wesentlichen durchgängige Reibfläche 7 zu schaffen.

Die Reibbeläge 2 weisen eine flache Reibfläche 7 einerseits und auf der der Reibfläche 7 gegenüberliegenden Seite eine Vielzahl von Noppen 9 auf. Die Noppen 9 sind voneinander beabstandet angeordnet. Dadurch sind Luftspalte 8 zwischen den Noppen 9 ausgebildet. Durch diese Luftspalte 8 können Luftströme 11 strömen und somit den Reibbelag 2 kühlen.

Die Noppen 9 dienen dazu, die Reibfläche 7 vom Lamellengrundkörper 3 zu beabstanden, insbesondere in axialer Richtung 4. Somit muss die Reibungswärme am Reibbelag 2 nicht durch den Lamellengrundkörper 3 weggeleitet werden, sondern kann vielmehr unmittelbar durch eine insbesondere hintere Umströmung des Reibbelags 2 erfolgen. Im Betrieb werden die Reibbeläge 2 in radialer Richtung 5 von Luft durchströmt.

Die Reibbeläge 2 weisen Bohrungen 10 auf, welche der Verschraubung mit dem Lamellengrundkörper 3 dienen. Vorzugsweise sind die Reibbeläge 2 auf beiden Seiten des Lamellengrundkörpers 3 zueinander versetzt angeordnet. Hierdurch kann das Auftreten von Reibungswärme vergleichmäßigt und die Luftkühlung der Reibbeläge 2 verbessert werden.

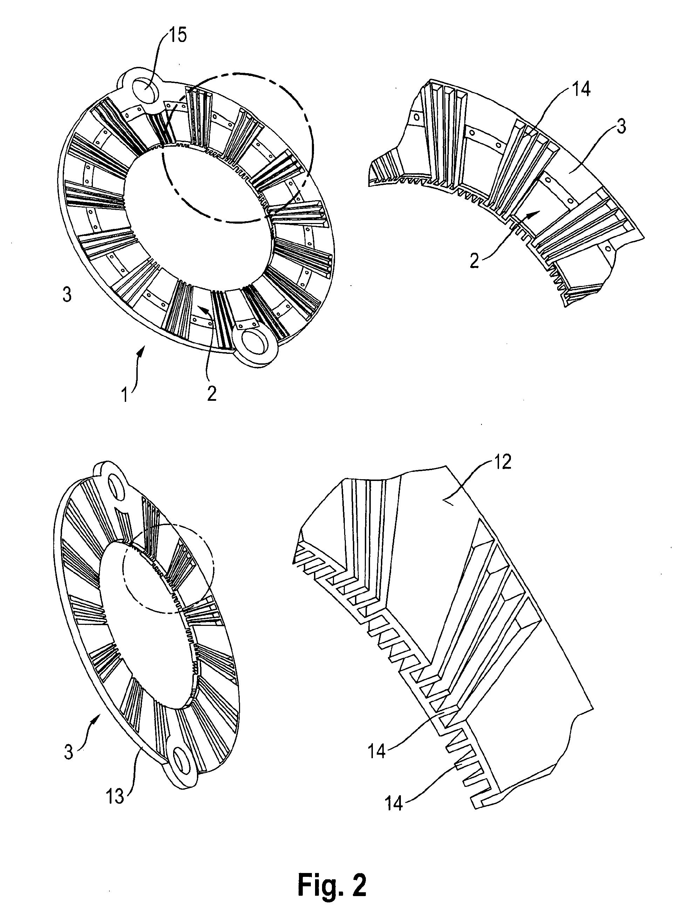

Fig. 2 zeigt eine alternative Ausführungsform einer Außenlamelle 1. Diese verfügt über einen Lamellengrundkörper 3, welcher über Montageflächen 12 einerseits und Kühlrippen 14 andererseits verfügt. Auf jeder Seite des Lamellengrundkörpers 3 sind immer abwechselnd eine Montagefläche 12 und Kühlrippen 14 vorgesehen. Die Montagefläche 12 und die Kühlrippen 14 liegen auf den beiden einander in axialer Richtung 4 gegenüberliegenden Seiten des Lamellengrundkörpers 3 einander gegenüber. Hierdurch kann eine besonders gute Kühlung der Reibbeläge 2 erfolgen. Die Reibbeläge 2 werden nämlich auf den Montageflächen 12 angeordnet. Die im Betrieb entstehende Reibungswärme kann somit jeweils an der Rückseite des Reibbelags 2 durch die dort vorgesehenen Kühlrippen 14 effektiv abgeführt werden. Durch die Kühlrippen 14 vergrößert sich nämlich die für einen Wärmeaustausch zur Verfügung stehende Oberfläche.

Der Lamellengrundkörper 3 steht bei bestimmungsgemäßer Montage in radialer Richtung 5 über eine Innenlamelle über, Während die Reibbeläge 2 nur in dem mit der Innenlamelle in Kontakt tretenden Bereich angeordnet sind, stehen die Kühlrippen 14 über die Innenlamelle über. Dadurch wird eine besonders gute Wärmeabführung erreicht. Der Lamellengrundkörper 3 ist an seiner in radialer Richtung 5 außen umlaufenden Stirnfläche geschlossen. Hierzu ist eine Art Ring 13 vorgesehen. Dieser dient dazu, den Lamellengrundkörper 3, d. h. die Außenlamelle 1 insgesamt zu versteifen. Somit kann trotz der vorgesehenen Kühlrippen 14 ein ordnungsgemäßer Betrieb erreicht werden.

Die Außenlamellen 1 verfügen jeweils noch über Bohrungen 15 für eine Bundbuchse, in welcher die Außenlamellen 1 bei bestimmungsgemäßer Verwendung in einer Kupplungs-Brems-Kombination aufgenommen werden.

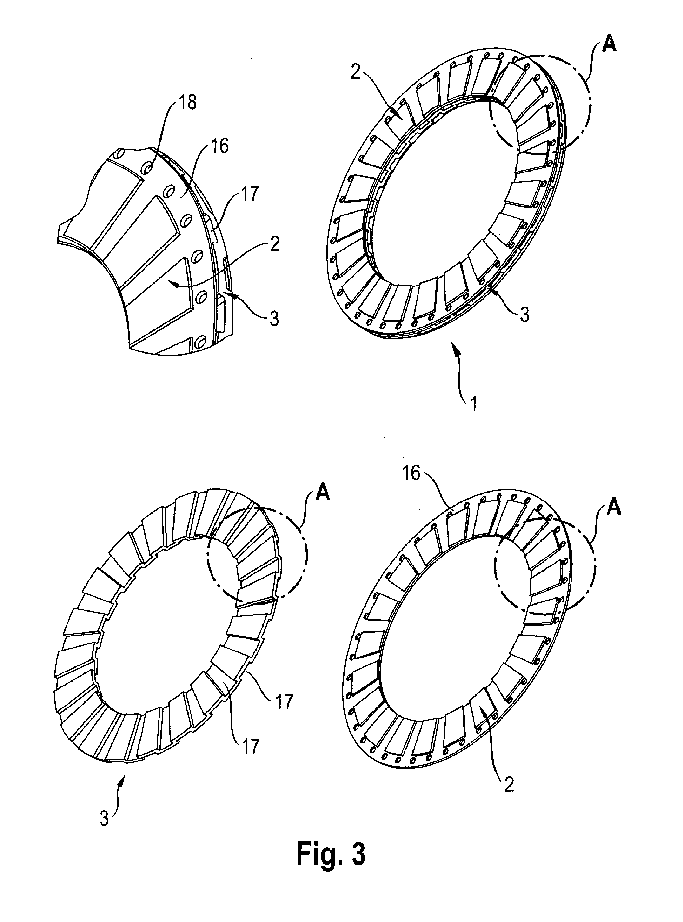

Fig. 3 zeigt eine weitere Ausführungsform einer Außenlamelle 1. Diese verfügt über einen Lamellengrundkörper 3, welcher über in radialer Richtung 5 verlaufende Kanäle 17 verfügt. Die Kanäle 17 sind in Umfangsrichtung 6 voneinander beabstandet. Die Kanäle 17 sind zudem abwechselnd auf beiden Seiten des Lamellengrundkörpers 3 ausgebildet.

Auf diesem Lamellengrundkörper 3 wird ein Belagträger 16 angeordnet. Dieser kann als ringförmiges Blech ausgebildet sein. Auf dem Belagträger 16 sind eine Vielzahl von Reibbelägen 2 angeordnet. Der Belagträger 16 wird mit einer Verschraubung 18 am Lamellengrundkörper 3 befestigt. Die Reibbeläge 2 des Belagträgers 16 sind dabei derart angeordnet, dass sie jeweils mit einem Kanal 17 des Lamellengrundkörpers 3 zusammenwirken. Dies bedeutet, dass jedem Reibbelag 2 ein Kanal 17 zugeordnet ist, durch welchen der Reibbelag 2 hinterströmt werden kann. Dies verbessert die Abfuhr von Reibungswärme.

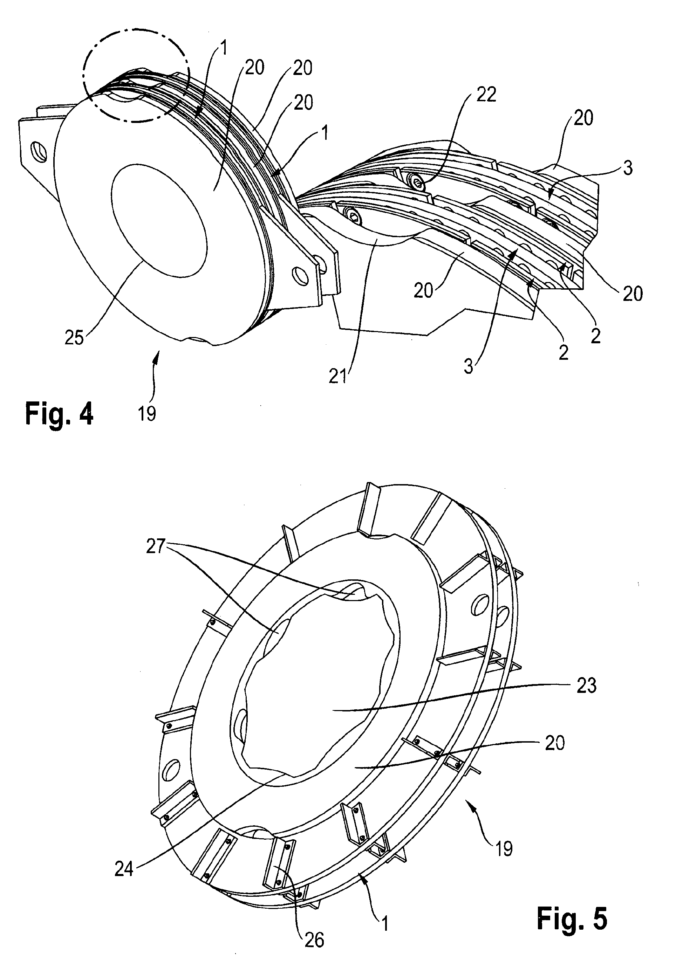

Fig. 4 zeigt ein verwendungsfertig montiertes Lamellenpaket 19. In der dargestellten Ausführungsform kommen Außenlamellen 1 gemäß Fig. 1 zum Einsatz. Es sind zwei Außenlamellen 1 vorgesehen, an welche sich jeweils Innenlamellen 20 anschließen. Die Außenlamellen 1 und die Innenlamellen 20 sind abwechselnd angeordnet.

Die Innenlamellen 20 weisen in dieser Ausführungsform Montageöffnungen 21 auf. Durch diese Montageöffnungen 21 sind Schrauben 22 zugänglich, mit welchen die Reibbeläge 2 an den Lamellengrundkörpern 3 der Außenlamellen 1 befestigt sind. Dadurch kann ein Wechsel der Reibbeläge 2 ohne eine Demontage der Lamellengrundkörper 3 oder der Innenlamellen 20 durchgeführt werden. Dies vereinfacht die Handhabung.

Fig. 5 zeigt eine weitere Ausführungsform eines Lamellenpakets 19. Dieses verfügt ebenfalls über abwechselnd angeordnete Innenlamellen 20 und Außenlamellen 1. Die Besonderheit der Außenlamellen 1 besteht darin, dass sie sich in radialer Richtung 5 über die Innenlamellen 20 hinweg erstrecken. In diesem zusätzlichen Bereich sind Lüfterflügel 26 angeordnet. Diese dienen dazu, den zur Kühlung durch das Lamellenpaket 19 strömenden Luftstrom zu optimieren. Dadurch kann die Kühlleistung weiterverbessert werden.

Die Ausführungsformen nach Fig. 4 und Fig. 5 zeigen eine Besonderheit hinsichtlich der Innenlamellen 20. Die Innenlamellen 20 sind nämlich aus einem keramischen Faserverbundwerkstoff ausgebildet, vorliegend C/C-SiC. Dieser Werkstoff hat den Vorteil, dass er eine sehr geringe Dichte aufweist und somit die beim bestimmungsgemäßen Betrieb sich mitdrehenden Innenlamellen nur geringe Massenträgheitsmomente im Hinblick auf die Dynamik erzeugen. Hierdurch kann insgesamt Energie eingespart werden. Ein weiterer Vorteil dieses Werkstoffs besteht darin, dass er eine sehr hohe Temperaturfestigkeit und nur eine geringe Wärmeausdehnung aufweist.

Die Innenlamellen 20 werden vorzugsweise als spiralgewebtes Ringgeflecht hergestellt. Dadurch kann Materialverschnitt weitestgehend vermieden werden. Hinzukommt, dass die Fasern nicht mehr angeschnitten werden müssen, beispielsweise zur Einbringung einer Innenverzahnung oder dergleichen, was sich negativ auf die Gewebefestigkeit auswirken würde.

Versuche der Anmelderin haben gezeigt, dass sich durch das Spiralweben eines Ringgeflechts besonders präzise die Innenkontur 25 (Fig. 4) oder Innenkontur 24 (Fig. 5) ausbilden lässt. Diese können beim Ausbilden der Innenlamelle 20 selbst bereits endfertig hergestellt werden. Ein entsprechender Träger 23 für die Innenlamellen 20 weist dann eine entsprechend ausgebildete Außenkontur auf. Die Außenkontur des Trägers 23 kann jedoch auch anders als die Innenkontur der Innenlamelle 20 ausgebildet sein. Es können bei auf dem Träger 23 montierter Innenlamelle 20 freie Bereiche verbleiben, an denen die Innenlamelle 20 nicht unmittelbar auf dem Träger 23 aufliegt. Diese können als Belüftungsöffnungen 27 genutzt werden. Kühlluft kann nahe des Trägers 23 in das Innere des Lamellenpakets 19 durch die Belüftungsöffnungen 27 einströmen und das Lamellenpaket 19 in radialer Richtung 5 nach außen verlassen.

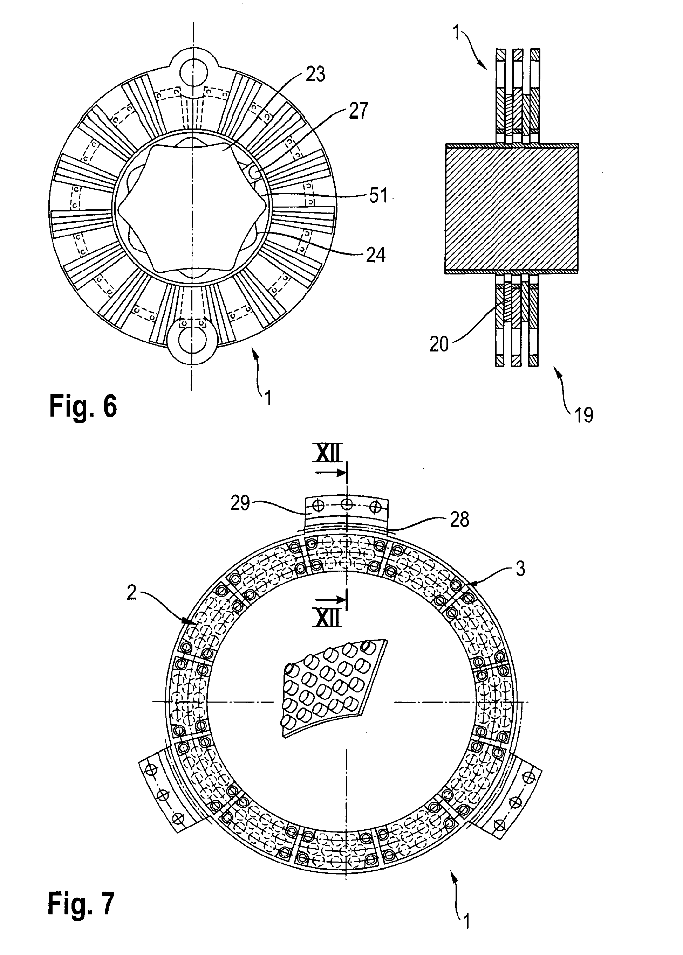

Fig. 6 zeigt eine Draufsicht auf ein auf einem Träger 23 montiertes Lamellenpaket 19. Die Innenkontur einer Innenlamelle 20 ist angedeutet, die Innenlamelle 20 darüber hinaus jedoch weggeschnitten. Dies ermöglicht den Blick auf die Außenlamellen 1, welche gemäß der Ausführungsform nach Fig. 2 ausgebildet ist.

Es ist zu erkennen, dass die Innenkontur 24 und die Außenkontur 51 derart ausgebildet sind, dass zwischen dem Träger 23 und der Außenlamelle 1 Belüftungsöffnungen 27 bleiben. Diese können wie vorstehend beschrieben verwendet werden.

Fig. 7 zeigt eine weitere Ausführungsform einer erfindungsgemäßen Außenlamelle 1. Diese ist als durchgängiger, einstückiger Ringkörper ausgebildet. Auf einem Lamellengrundkörper 3 sind eine Vielzahl von Reibbelägen 2 angeordnet. Die Außenlamelle 1 weist drei in Umfangsrichtung 6 verteilte Stützen 29 auf. Die Stützen 29 und der Lamellengrundkörper 3 sind durch eine Verzahnung 28 miteinander gekoppelt. Die Verzahnung 28 führt zu einer Selbstzentrierung der Außenlamelle 1. Darüber hinaus ermöglicht sie auch den Ausgleich möglicher Ausdehnungen des Lamellengrundkörpers 3 infolge von Wärmeeinwirkung.

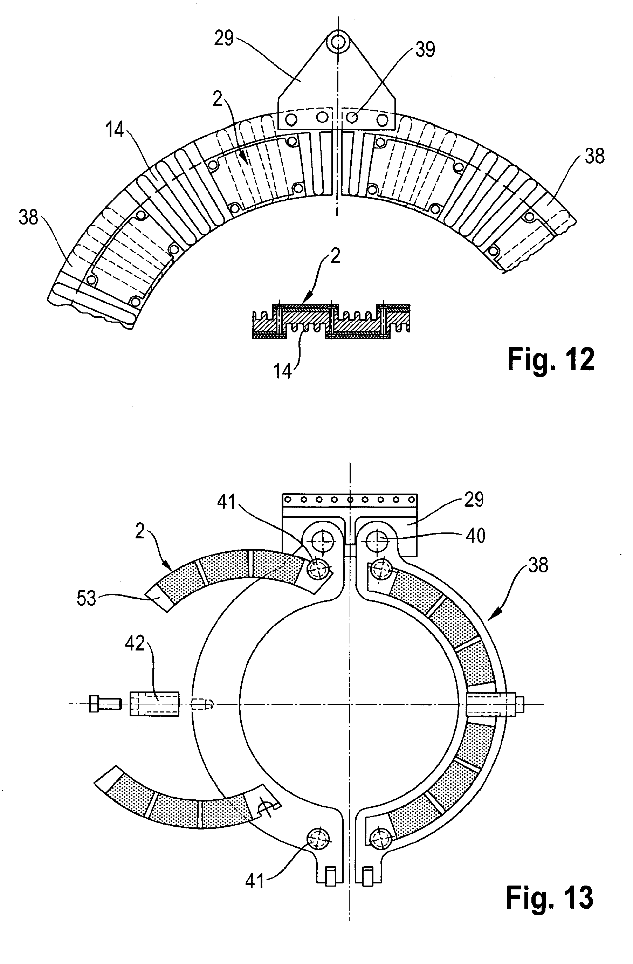

Fig. 12 zeigt einen Schnitt entlang der Linie XII-XII in Fig. 7. Dargestellt ist die Stütze 29 und der Lamellengrundkörper 3, welcher durch eine Verzahnung 28 miteinander gekoppelt sind. Eine Besonderheit des Lamellengrundkörpers 3 besteht darin, dass er in axialer Richtung 4 vorstehende Noppen 9 aufweist. Auf diesen Noppen 9 werden die Reibbeläge 2 angeordnet. Durch die Noppen 9 sind die Reibbeläge 2 vom Lamellengrundkörper 3 durch Luftspalte 8 beabstandet. Die zuvor bereits beschriebene Beabstandung kann also nicht nur durch am Reibbelag 2 selbst vorgesehene Noppen 9 erreicht werden, sondern auch durch am Lamellengrundkörper 3 vorgesehenen Noppen 9. Die Reibbeläge 2 sind in bereits beschriebener Art und Weise mit dem Lamellengrundkörper 3 verbunden. Hierzu dient ein Niet 36 oder eine entsprechende Schraube.

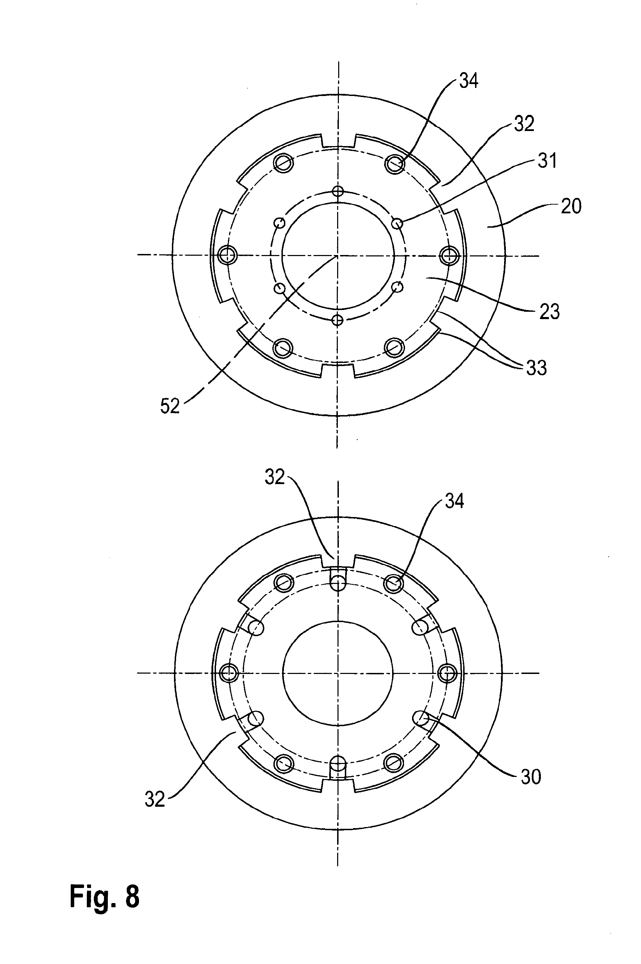

Fig. 8 zeigt alternative Ausführungsformen von Innenlamellen 20 und Trägern 23 für diese Innenlamellen 20. Vorliegend ist eine Kontur mit Nocken 32 bzw. entsprechenden Nuten am Träger 23 vorgesehen. Die Nocken 32 weisen Flanken auf, welche radial zur Achse 52 der Anordnung verlaufen. Zwischen der Innenlamelle 20 und dem Träger 23 sind Ausgleichsfugen 33 vorgesehen. Diese dienen dem Ausgleich von Materialausdehnungen infolge von Wämeeinfluss.

Eine Besonderheit der beiden Träger 23 besteht darin, dass Luftkanäle 30 und/oder Kühlölkanäle 31 vorgesehen sind. Die Luftkanäle 30 können in axialer Richtung unterhalb der Nuten für die Nocken 32 verlaufen. Im Bereich jeder Innenlamelle 20 und/oder Außenlamelle 1 kann der Luftkanal 30 durch einen radialen Kanal offen zur Belüftung des Lamellenpakets 19 ausgebildet sein. Die Kühlölkanäle 31 wiederum bilden ein gekapseltes Kühlsystem. Sie dienen dazu, im Inneren des Trägers 23 Wärme abzuführen. Der Kühlölkanal 31 stellt ein indirektes Kühlsystem dar, d. h. die Außenlamelle 1, die Innenlamelle 20 oder sonstige Bauteile der Kupplungs-Brems-Kombination kommen nicht direkt mit dem Kühlöl in Verbindung. Insofern kann auch kein Kühlöl austreten, was zu Umweltschädigungen führen könnte.

Im Querschnitt sind noch Druckbolzen 34 zu sehen, welche einer Betätigung der Kupplungs-Brems-Kombination dienen und im Folgenden noch beschrieben werden.

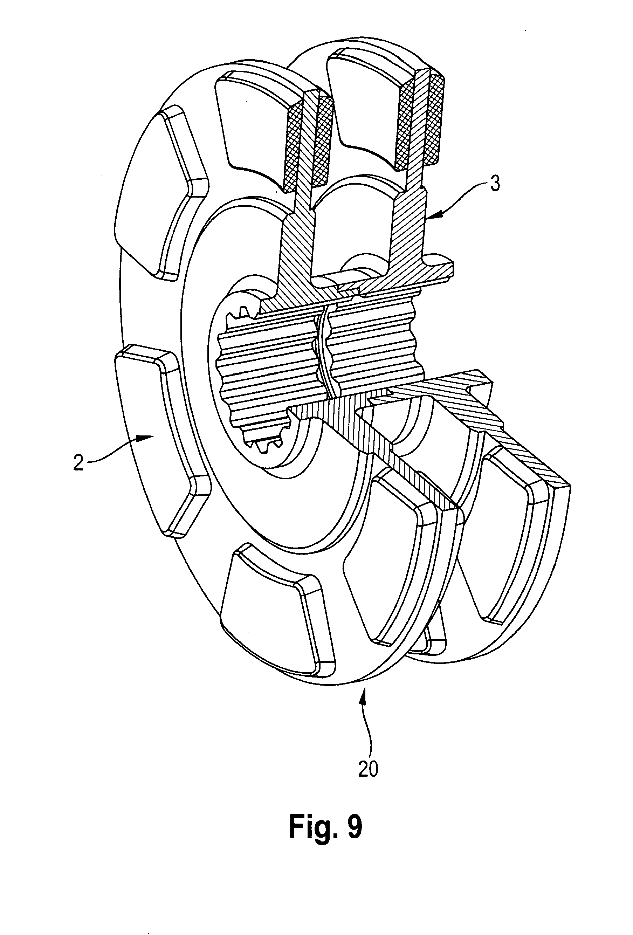

Fig. 9 zeigt eine weitere Ausführungsform von Innenlamellen 20. Diese sind vorliegend aus einem faserverstärkten Kunststoff, insbesondere Thermoplast, besonders bevorzugt mit einer Mikroschaum-Struktur, gebildet. Dieses Material weist den Vorteil auf, dass es eine gegenüber einem keramischen Faserverbundwerkstoff nochmals verringerte Dichte aufweist. Zudem sorgt die Mikroschaum-Struktur für einen hohen Dämpfungsgrad.

Der Lamellengrundkörper 3 ist aus diesem Material gebildet. Die Reibbeläge 2 sind hingegen aus dem keramischen Faserverbundwerkstoff wie bereits beschrieben gebildet. Die Reibbeläge 2 können auf den Lamellengrundkörper 3 geklebt werden.

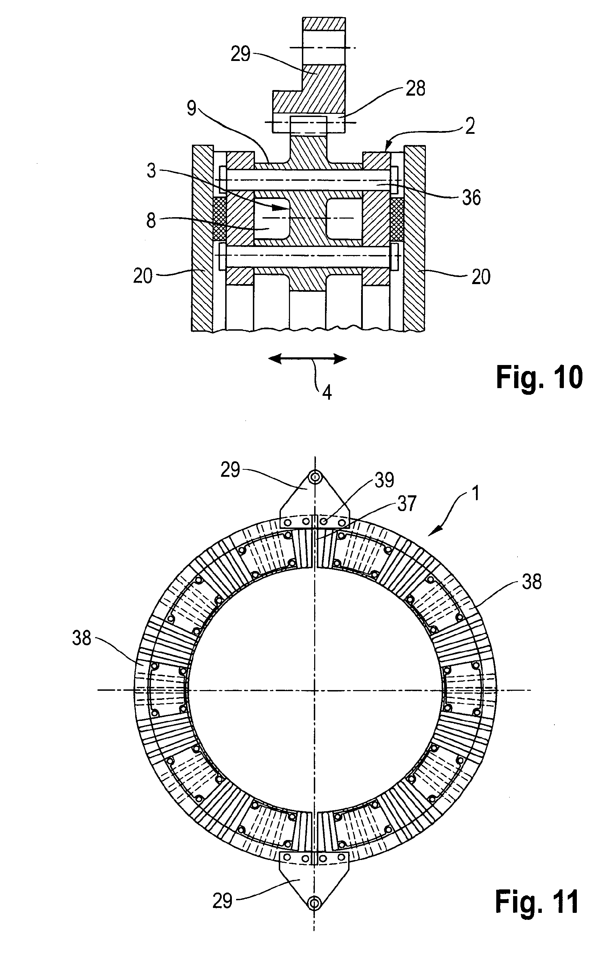

Fig. 11 zeigt eine weitere Ausführungsform einer Außenlamelle 1. Diese ist aus zwei voneinander unabhängigen Ringhälften 38 gebildet. Die beiden Ringhälften 38 sind durch zwei Stützen 29 miteinander verbunden. Hierzu weist jede Stütze 4 Bolzen 39 auf, wobei jeweils zwei Bolzen 3, 9 einer Stütze 29 mit einer Ringhälfte 38 verbunden werden. Dadurch sind die Ringhälften 38 drehfest an den Stützen 29 gehalten. Zwischen den beiden Ringhälften 38 kann ein Spalt 37 ausgebildet sein.

Fig. 12 zeigt die Ausführungsform gemäß Fig. 11 im Detail. In einer radialen Draufsicht ist zudem dargestellt, dass die Außenlamelle 1 vorliegend gemäß der Ausführungsform nach Fig. 2 mit Reibbelägen 2 und Kühlrippen 15 ausgestattet ist.

Fig. 13 zeigt eine weitere Ausführungsform einer Außenlamelle 1. Diese ist aus zwei Ringhälften 38 gebildet, wie vorstehend beschrieben. Die beiden Ringhälften 38 weisen jedoch Reibbeläge 2 auf, welche pro Ringhälfte 38 in zwei Hälften unterteilt sind. Die Reibbeläge 2 sind hierzu auf Trägern 53 angeordnet. Die Träger 53 werden jeweils an Bolzen 41 angeordnet und anschließend beide miteinander lagefixiert durch ein Klemmelement 42 verbunden. Dadurch bilden jeweils zwei Träger 53 mit darauf angeordneten Reibbelägen 2 ein starres Bauteil. Dieses ist durch die Bolzen 41 fest mit der jeweiligen Ringhälfte 38 verbunden.

Hierdurch wird eine Außenlamelle 1 geschaffen, bei der ein Wechsel der Reibbeläge 2 besonders einfach vonstattengeht. Dies auch dadurch, dass nicht jeder Reibbelag 2 einzeln ausgewechselt werden muss, sondern diese vielmehr zusammenhängend auf dem Träger 53 angeordnet sind.

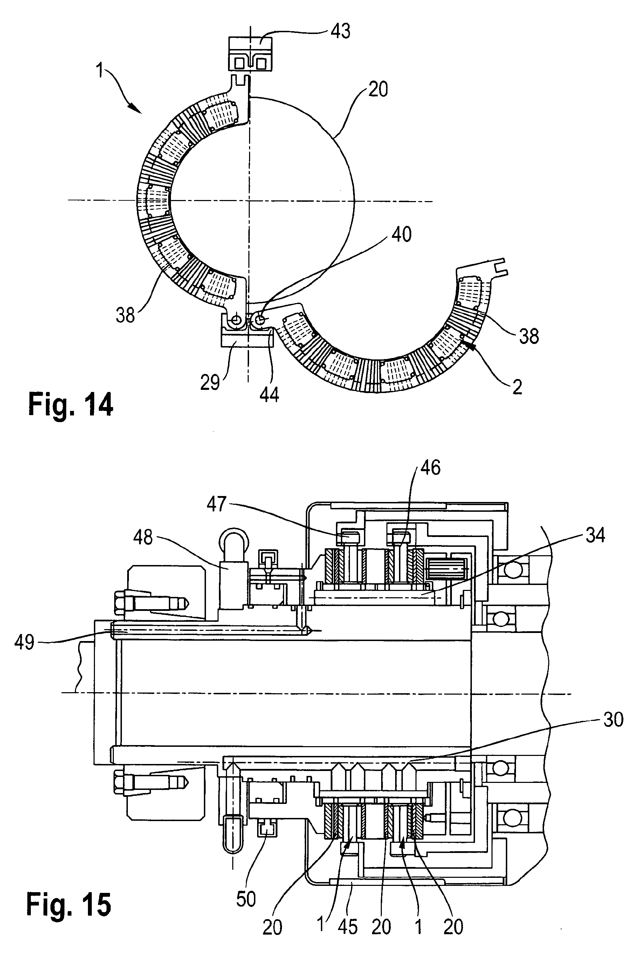

Fig. 14 zeigt eine weitere Ausführungsform einer Außenlamelle 1. Diese ist hinsichtlich der Anordnung der Reibbeläge 2 gemäß Fig. 2 ausgebildet, d. h. verfügt über Kühlrippen 14. Die Besonderheit liegt darin, dass die Außenlamelle 1 ebenfalls aus zwei Ringhälften 38 besteht, welche unabhängig voneinander aufgeklappt werden können. Die beiden Ringhälften 38 sind durch eine erste Stütze 29 miteinander verbunden. Jede Ringhälfte 38 ist jeweils um einen Bolzen 40 dieser Stütze 29 drehbar gelagert. Eine zweite Stütze 43 dient als Drehmomentstütze. Die Ringhälften 38 können aus der Stütze 43 jeweils ausgehängt werden und somit zur Seite hin aufgeklappt werden. Die Stütze 43 dient gleichzeitig einem geometrischen und thermischen Toleranzausgleich.

An der Stütze 29 sind Anschläge 44 vorgesehen. Diese begrenzen den Aufklappwinkel der Ringhälften 38 mechanisch. Dadurch können Verletzungen ausgeschlossen werden. In der in Fig. 14 gezeigten aufgeklappten Stellung der rechten Ringhälfte 38 können die Reibbeläge 2 in einfacher Weise ausgewechselt werden. Hierdurch wird die Handhabung weiter vereinfacht.

Fig. 15 zeigt eine Ausführungsform einer erfindungsgemäßen Kupplungs-Brems-Kombination im Längsschnitt. Die Kupplungs-Brems-Kombination verfügt über eine Bremse 46 einerseits und eine Kupplung 47 andererseits. Es handelt sich hierbei um eine reibschlüssige Lamellenbremse und reibschlüssige Lamellenkupplung. Die Bremse 46 und die Kupplung 47 weisen vorstehend bereits beschriebene Außenlamellen 1 und Innenlamellen 20 auf. Diese laufen trocken, das bedeutet, sie sind luftgekühlt. Der zur Luftkühlung erforderliche Luftstrom wird vorzugsweise ausschließlich durch Eigenventilation erzeugt. Um die entsprechenden strömungstechnischen Verhältnisse einzustellen, kann ein Staurohr 48 mit Trompetentrichter vorgesehen sein. Dieses ist mit einem vorstehend bereits angesprochenen Luftkanal 30 strömungstechnisch verbunden. Der Luftkanal 30 weist radiale Auslässe auf, durch welche Kühlluft zur Bremse 46 bzw. Kupplung 47 strömen kann.

Ergänzend kann ein Lüfter 45 vorgesehen sein. Dieser läuft um die Kupplung 47 und die Bremse 46 um. Er basiert auf dem Prinzip des Querstroms und sorgt für eine Durchströmung der Kupplungs-Brems-Kombination mit Luft. Der Lüfter 45 wird vorzugsweise durch die Kupplungs-Brems-Kombination selbst angetrieben, gegebenenfalls durch ein zur Vergleichmäßigung der dynamischen Verhältnisse vorgesehenes Schwungrad.

Die Kupplung 47 und die Bremse 46 werden durch einen Druckbolzen 34 angetrieben. Der Druckbolzen 34 arbeitet gegen die Kraft einer Feder, welche die Bremse 46 in die geschlossene Stellung drängt. Durch Betätigung des Druckbolzens 34, nämlich durch Beaufschlagung mit einem Drucköl durch den Druckölanschluss 49, kann die Bremse 46 gelüftet und die Kupplung 47 geschlossen werden.

Im Bereich der Druckölführung kann ein Fangring 50 vorgesehen sein. Dieser dient dazu, eventuell mögliches Lecköl aufzufangen. Dadurch kann praktisch ausgeschlossen werden, dass die Kupplungs-Brems-Kombination in nicht vorgesehener Weise Öl verliert. Neben der vorgesehenen Luftkühlung führt dies mit dazu, dass die Kupplungs-Brems-Kombination beispielsweise auch im maritimen Bereich verwendet werden kann.

### Bezugszeichenliste

- 1: Außenlamelle
- 2: Reibbelag
- 3: Lamellengrundkörper
- 4: axiale Richtung
- 5: radiale Richtung
- 6: Umfangsrichtung
- 7: Reibfläche
- 8: Luftspalt
- 9: Noppen
- 10: Bohrung
- 11: Luftstrom
- 12: Montagefläche
- 13: Ring
- 14: Kühlrippen
- 15: Bohrung für Bundbuchse
- 16: Belagträger
- 17: Kanal
- 18: Verschraubung
- 19: Lamellenpaket
- 20: Innenlamelle
- 21: Montageöffnung
- 22: Schraube
- 23: Träger
- 24: Innenkontur
- 25: Innenkontur
- 26: Lüfterflügel
- 27: Belüftungsöffnung
- 28: Verzahnung
- 29: Stütze
- 30: Luftkanal
- 31: Kühlölkanal
- 32: Ausgleichsfugen
- 33: Ausgleichsfugen
- 34: Druckbolzen
- 35: Außenkontur
- 36: Niet
- 37: Spalt
- 38: Ringhälften
- 39: Bolzen
- 40: Bolzen
- 41: Bolzen
- 42: Klemmelement
- 43: Stütze
- 44: Anschlag
- 45: Lüfter
- 46: Bremse
- 47: Kupplung
- 48: Staurohr
- 49: Druckölanschluss
- 50: Fangring
- 51: Außenkontur
- 52: Mittelachse
- 53: Träger

## Patentansprüche

1. Kupplungs-Brems-Kombination mit einer reibschlüssigen Kupplung (47) und einer reibschlüssigen Bremse (46), wobei die Kupplung (47) und die Bremse (46) jeweils über äußere und innere Lamellen (1, 20) mit Reibbelägen (2) verfügen, wobei ein Kolben derart zwischen der Kupplung (47) und der Bremse (46) beweglich angeordnet ist, dass entweder die Kupplung (47) geöffnet und die Bremse (46) geschlossen oder aber die Kupplung (47) geschlossen und die Bremse (46) geöffnet ist, **dadurch gekennzeichnet, dass** die Kupplung (47) und/oder die Bremse (46) durch Eigenventilation luftgekühlt sind.

2. Kupplungs-Brems-Kombination nach Anspruch 1, **dadurch gekennzeichnet, dass** die Reibbeläge (2) zumindest einer Lamelle (1, 20) unter Belassung eines Luftspalts (8) auf einem Lamellengrundkörper (3) angeordnet sind.

3. Kupplungs-Brems-Kombination nach Anspruch 2, **dadurch gekennzeichnet, dass** die Reibbeläge (2) vom Lamellengrundkörper (3) durch Abstandshalteelemente beabstandet angeordnet sind.

4. Kupplungs-Brems-Kombination nach Anspruch 3, **dadurch gekennzeichnet, dass** die Abstandshalteelemente als über die der Reibfläche (7) gegenüberliegende Seite des Reibbelags (2) verteilte Noppen (9) ausgebildet sind.

5. Kupplungs-Brems-Kombination nach Anspruch 2, **dadurch gekennzeichnet, dass** der Lamellengrundkörper (3) radiale Kanäle (17) aufweist, auf denen bei bestimmungsgemäßer Verwendung die Reibbeläge (2) angeordnet sind.

6. Kupplungs-Brems-Kombination nach einem der vorangehenden Ansprüche, **dadurch gekennzeichnet, dass** zumindest eine Lamelle (1, 20) auf der dem Reibbelag (2) gegenüberliegenden Seite Kühlrippen (14) aufweist.

7. Kupplungs-Brems-Kombination nach Anspruch 6, **dadurch gekennzeichnet, dass** zumindest eine Lamelle (1, 20) auf beiden Seiten in Umfangsrichtung (6) abwechselnd einen Reibbelag (2) und Kühlrippen (14) aufweist.

8. Kupplungs-Brems-Kombination nach einem der vorangehenden Ansprüche, **dadurch gekennzeichnet, dass** zumindest eine äußere Lamelle (1) in einem radial über eine innere Lamelle (20) vorstehenden Bereich zumindest ein Luftleitelement (26) aufweist.

9. Kupplungs-Brems-Kombination nach einem der vorangehenden Ansprüche, **dadurch gekennzeichnet, dass** zumindest eine innere Lamelle (20) eine Belüftungsöffnung (27) aufweist.

10. Kupplungs-Brems-Kombination nach einem der vorangehenden Ansprüche, **dadurch gekennzeichnet, dass** die Reibbeläge (2) der inneren Lamellen (20) aus einem keramischen Faserverbundwerkstoff, insbesondere C/C-SiC ausgebildet sind.

11. Kupplungs-Brems-Kombination nach einem der vorangehenden Ansprüche, **dadurch gekennzeichnet, dass** die inneren Lamellen (20) aus einem keramischen Faserverbundwerkstoff, insbesondere C/C-SiC, oder aus einem faserverstärkten Kunststoff ausgebildet sind.

12. Kupplungs-Brems-Kombination nach einem der vorangehenden Ansprüche, **dadurch gekennzeichnet, dass** die inneren Lamellen (20) aus einem spiralgewebten Ringgeflecht aus keramischen Faserverbundwerkstoff, insbesondere C/C-SiC, ausgebildet sind.

13. Kupplungs-Brems-Kombination nach einem der vorangehenden Ansprüche, **dadurch gekennzeichnet, dass** die inneren Lamellen (20) über den Umfang verteilt radial nach innen vorstehende Nocken (32) aufweisen.

14. Kupplungs-Brems-Kombination nach einem der vorangehenden Ansprüche, **gekennzeichnet durch** einen mit einem Schwungrad gekoppelten Lüfter (45).

15. Kupplungs-Brems-Kombination nach einem der vorangehenden Ansprüche, **dadurch gekennzeichnet, dass** in einem die inneren Lamellen (20) tragenden Zylinder (23) Luftkanäle (30) und/oder Kühlölkanäle (31) vorgesehen sind.
